Europäisches Patentamt

European Patent Office

Office européen des brevets

(11) Veröffentlichungsnummer: **0 306 625**

**A2**

## (12) EUROPÄISCHE PATENTANMELDUNG

(21) Anmeldenummer: 88109156.5

(51) Int. Cl.⁴: **B60G 3/20**

(22) Anmeldetag: 08.06.88

---

Ein Antrag gemäss Regel 88 EPÜ auf Hinzufügung der ersten Anspruchsseite liegt vor. Über diesen Antrag wird im Laufe des Verfahrens von der Prüfungsabteilung eine Entscheidung getroffen werden (Richtlinien für die Prüfung im EPA, A-V, 2.2).

(30) Priorität: 05.09.87 DE 3729767

(43) Veröffentlichungstag der Anmeldung:
15.03.89 Patentblatt 89/11

(84) Benannte Vertragsstaaten:
DE FR GB IT SE

(71) Anmelder: **BAYERISCHE MOTOREN WERKE AG**
**Postfach 40 02 40 Petuelring 130 - AJ-31**
**D-8000 München 40(DE)**

(72) Erfinder: **Matschinsky, Wolfgang**
**Georgenschwaigstrasse 18**
**D-8000 München 40(DE)**

---

(54) **Radaufhängung für lenkbare Räder.**

(57) Die beschriebene Radaufhängung dient für ein lenkbares Rad (1), das durch einen Radträger (2) gelagert ist. Der Radträger (2) ist über einen oberen Querlenker (4) und einen unteren Querlenker (5) mit dem Fahrzeugaufbau (9) verbunden. Dabei steht der untere Querlenker (5) mit dem Fahrzeugaufbau (9) über eine in Querrichtung steife Anlenkung (7) und über eine etwa lotrechte Pendelstüzte (8) in Verbindung.

Der über das Führungsgelenk (18) mit dem unteren Querlenker (5) verbundene Radträger (2) ist ferner gelenkig mit einer Zugstange (11) verbunden, die außerdem über das Gelenk (15) sich an dem unteren Querlenker (5) abstützt und über das Gelenk (16) mit einer schrägen Strebe (10) in Verbindung steht.

Beim Lenken verdreht sich einerseits der Radträger (2) und den ideellen, momentanen Pol , anderseits wird er auch geringfügig um die Verbindungslinie (24) nach oben geschwenkt, was über die seitlich von der Verbindungslinie (24) angreifende Tragfeder (6) eine gute Gewichtsrückstellung bewirkt.

Fig.1

## Radaufhängung für lenkbare Räder

Die Erfindung bezieht sich auf eine Radaufhängung für lenkbare Räder nach der im Oberbegriff des Patentanspruchs 1 umschriebenen und durch die DE-PS 35 07 141 bekannten Bauart.

Mit der erwähnten bekannten Vorderradaufhängung läßt sich das Rad um eine ideelle Schwenkachse lenken, die deutlich außerhalb der realen radträgerseitigen Gelenke liegt. Auf diese Weise läßt sich ein relativ kleiner Störkrafthebelarm und außerdem ein ausreichend großer Einbauraum für die Bremse erreichen. Die bekannte Radaufhängung ermöglicht darüber hinaus eine gute Gewichtsrückstellung bei kleiner Spreizung.

Die Abstützung der vertikalen Zugstange gegenüber dem Radträger erfolgt bei der bekannten Bauart über ein Gelenk, das an einem Zwischenstück angeordnet ist, das seinerseits drehbar, aber um die Drehachse auch axial verschiebbar mit dem Radträger verbunden ist. An dem erwähnten Zwischenstück ist schließlich über ein ecksteifes Drehgelenk mit im wesentlichen längs verlaufender Drehachse der untere Querlenker angelenkt. Die axial verschiebliche Drehlagerung zwischen Radträger und Zwischenstück ist bauaufwendig und nur schwierig spielfrei zu gestalten.

Der Erfindung liegt demgegenüber die Aufgabe zugrunde, mit einfacheren Mitteln die Vorteile der vorbekannten Radaufhängung zu erreichen.

Diese Aufgabe wird bei einer Radaufhängung nach dem Oberbegriff des Patentanspruchs 1 erfindungsgemäß durch die in dessen Kennzeichen angegebenen Maßnahmen gelöst.

Weitere vorteilhafte Maßnahmen sind Gegenstand der Unteransprüche.

Bei der erfindungsgemäßen Radaufhängung kann auf das gegenüber dem Radträger verdrehbare und axial verschiebbare Zwischenstück verzichtet werden, desgleichen auf die für eine solche Lagerung zweckmäßig zu verwendenden Nadellager oder ähnliches. Mit der erfindungsgemäßen Radaufhängung führt eine über die Spurstange auf den Radträger ausgeübte Lenkbewegung nicht nur zu einer Verdrehung um die beiden äußeren Führungsgelenke der beiden Querlenker. Wegen der Koppelung der Zugstange mit der schrägen Strebe wird dem unteren Querlenker darüber hinaus eine Verschwenkung um das innere, quer steife Lager so aufgezwungen, daß sich eine ideale Lenkachse ergibt. Wegen des inneren Pendellenkers führt ein Verdrehen des unteren Querlenkers um eine Hochachse außerdem zu einer gewissen Verlagerung des Pendelstützengelenkes des unteren Querlenkers nach oben. Der untere Querlenker schwenkt um die Verbindungslinie zwischen dessen aufbauseitigem, quer steifen Gelenk und dem äußeren Führungsgelenk. Sieht man den Angriffspunkt der Tragfeder auf der gleichen Seite in bezug auf die genannte Verbindungslinie vor wie die Pendelstütze, so bedingt eine Lenkbewegung ein Anheben der Tragfeder und damit des Fahrzeugaufbaus, was schließlich eine gute Gewichtsrückstellung der neuen Radaufhängung gewährleistet.

Die Erfindung ist im folgenden anhand eines in der Zeichnung näher dargestellten Ausführungsbeispiels erläutert. Es zeigen

Fig. 1 eine perspektivische Ansicht der neuen Radaufhängung und

Fig. 2 eine etwas schematisierte Darstellung der Radaufhängung nach Fig. 1 in Draufsicht.

In der Zeichnung ist mit 1 ein lenkbares vorderes Rad bezeichnet, das auf einem Radträger 2 gelagert ist. An dem Radträger 2 greifen gelenkig eine Spurstange 3, ein oberer Querlenker 4 und ein unterer Querlenker 5 an.

Der untere, die Tragfeder 6 abstützende Querlenker 5 ist über eine quer zur Fahrtrichtung F steife Anlenkung 7 und über eine nach oben gerichtete Pendelstütze 8 mit dem lediglich angedeuteten Fahrzeugaufbau 9 verbunden. Sämtliche aufbauseitigen Anlenkungen und Gelenke könnten jedoch auch an einem Hilfsträger oder Fahrschemel vorgesehen sein, der dann seinerseits mit dem übrigen Fahrzeugaufbau verbunden ist.

Die Radaufhängung umfaßt ferner eine am Fahrzeugaufbau in größerem Längsabstand von der Anlenkung 7 bzw. der Pendelstütze 8 entfernt angelenkte Strebe 10, die außen gelenkig an einer annähernd vertikalen Zugstange 11 angreift. Die Zugstange 11 ist an ihrem oberen Ende an einem vor dem Gelenk 12 des oberen Querlenkers 4 befindlichen Arm 13 des Radträgers 2 über das Gelenk 14 angelenkt.

Die Zugstange 11 ist weiterhin gelenkig - durch das Gelenk 15 - an dem unteren Querlenker 5 abgestützt und über das darunter liegende Gelenk 16 schließlich mit der schon erwähnten Strebe 10 verbunden. Die aufbauseitige Anlenkung 17 der Strebe 10 kann relativ weich ausgeführt werden, so daß sich eine gute Horizontalfederung der gesamten Radaufhängung ergibt. Wegen des großen Lagerabstandes zwischen der Anlenkung 17 und der Anlenkung 7 wird dabei trotzdem die Radgeometrie wenig beeinflußt. Mit dem unteren Querlenker 5 steht der Radträger 2 schließlich noch über ein zweckmäßig als Kugelgelenk ausgebildetes Führungsgelenk 18 in Verbindung.

Bei dem dargestellten Ausführungsbeispiel ist die Zugstange 11 zwischen ihrem oberen und ihrem unteren Ende mit dem unteren Querlenker 5 gelenkig verbunden.

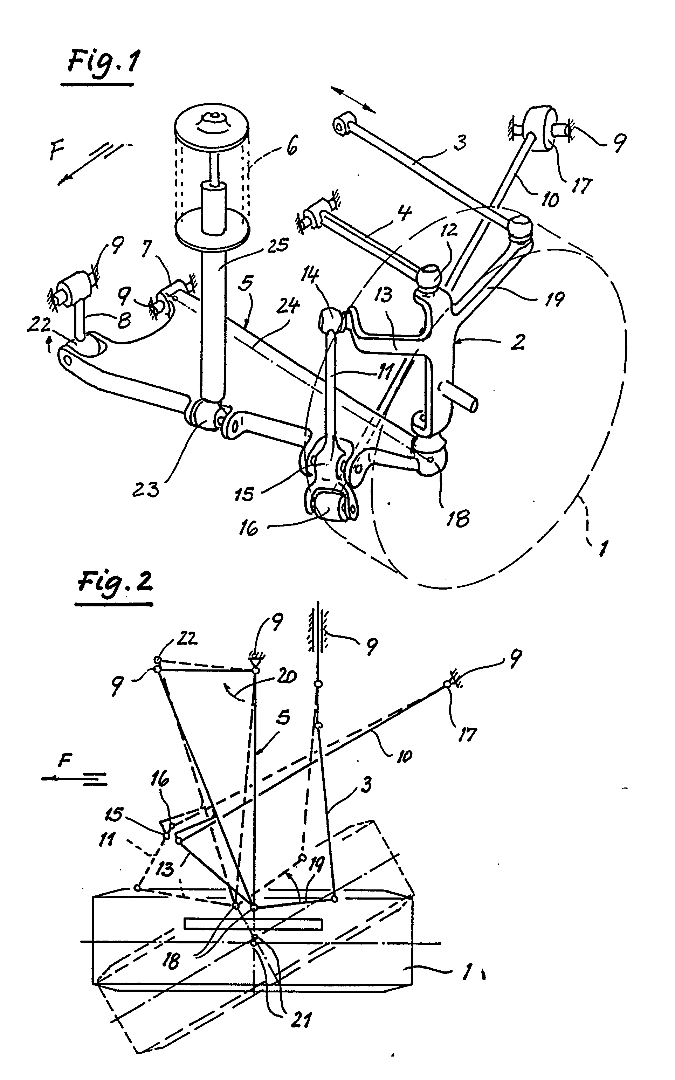

Wird durch Betätigen der an dem Lenkhebel 19 des Radträgers 2 angreifenden Spurstange 3 das Rad 1 gelenkt, so wird der Radträger 2 nicht nur um die Gelenke 12 und 18 gedreht, sondern es erfolgt auch eine Längsbewegung des unteren Führungsgelenks 18. Diese Bewegung erfolgt aufgrund der Zugstange 11, die beim Drehen des Lenkhebels 19 im Sinne der Draufsicht gemäß Fig. 2 entgegen dem Uhrzeigersinn das äußere Ende des unteren Querlenkers nach vorne zieht. Die Folge ist eine geringe Verschwenkung des unteren Querlenkers 5 im Uhrzeigersinn im Sinne des Pfeiles 20. Diese Verschwenkung, bzw. die Verlagerung des Führungsgelenks 18 nach vorne, zusammen mit der Drehung des Radträgers 2 um die beiden Gelenke 12 und 18, führt in der schon in dem Patent 35 07 141 beschriebenen Weise dazu, daß das Rad 1 sich um einen ideellen, momentanen Pol 21 dreht, der weiter außen liegt als die realen Gelenke 12 und 18.

Bei dem beschriebenen Verschwenken des unteren Querlenkers 5 im Sinne des Pfeiles 20 wird dessen der Pendelstütze 8 zugeordnetes Gelenk 22 - abhängig von der Länge der Pendelstütze 8 - auch etwas nach oben bewegt.

Wählt man nun die Abstützung 23 der Tragfeder 6 in bezug auf die Verbindungslinie 24 des quer steifen aufbauseitigen Gelenks 7 des unteren Querlenkers 5 mit dessen Radträger-Gelenk 18 auf der gleichen Seite wie die Pendelstütze 8, so wird auch die Abstützung 23 nach oben wandern, wenn das Gelenk 22 nach oben bewegt wird. Der Lenkeinschlag des Rades 1 führt daher zu einem geringfügigen Anheben des Fahrzeugaufbaus, was eine gute Gewichtsrückstellung der Radaufhängung mit sich bringt, worunter das Bestreben verstanden wird, daß die Räder 1 sich selbsttätig wieder eher in die Geradeausstellung zurückführen.

An sich würde - ohne das Verschwenken des Querlenkers 5 um die Verbindungslinie 24 - eine Lenkbewegung des Radträgers wegen dessen gelenkiger Anbindung über die Zugstange 11 an den Querlenker 5 eine Schiefstellung des Radträgers 2 im Sinne einer Nachlaufänderung bewirken. Durch richtige Abstimmung der Längen der Pendelstütze 8, der Zugstange 11 und des Abstandes zwischen dem Gelenk 15 und der Verbindungslinie 24 kann dies jedoch vermieden werden, da das Gelenk 15 beim Lenken um den richtigen Betrag nach oben nachgeführt werden kann. Die Zugstange 11 ist hierzu bei dem dargestellten Ausführungsbeispiel auf der gleichen Seite der Verbindungslinie 24 am unteren Querlenker 5 angelenkt wie die Pendelstütze 8 und die Tragfeder 6.

Die beschriebene Gewichtsrückstellung ist natürlich ebenso gegeben, wenn an der Abstützung 23 eine andere Feder, beispielsweise eine Blattfeder oder das Widerlager einer Drehstabfeder angreift. Bei dem dargestellten Ausführungsbeispiel ist die Tragfeder 6 mit einem Stoßdämpfer 25 zu einem Federbein zusammengefaßt. Die neue Radaufhängung wurde für ein vorderes lenkbares Rad 1 beschrieben, sie ließe sich aber ebenfalls für ein hinteres Rad verwenden, wenn dieses lenkbar gemacht werden soll.

## Ansprüche

1. Radaufhängung für lenkbare Räder, insbesondere Vorderräder, von Kraftfahrzeugen, mit einem das Rad lagernden Radträger, an dem eine Spurstange und ein oberer Querlenker sowie ein unterer Querlenker gelenkig angreifen, wobei der untere, die Tragfeder abstützende Querlenker über eine quer steife Anlenkung und über eine nach oben gerichtete Pendelstütze mit dem Fahrzeugaufbau oder dergleichen verbunden und ferner eine innen aufbauseitig angelenkte und schräg zur Fahrzeuglängsrichtung verlaufende Strebe vorgesehen ist, die außen gelenkig an einer annähernd vertikalen Zugstange angreift, die am Radträger angelenkt und ferner in vertikalem Abstand gelenkig gegenüber dem Radträger abgestützt ist, dadurch gekennzeichnet, daß der Radträger (2) über ein Führungsgelenk direkt mit dem unteren Querlenker (5) verbunden und die Zugstange (11) gelenkig an dem unteren Querlenker (5) abgestützt ist (Gelenk 15).

2. Radaufhängung nach Anspruch 1, dadurch gekennzeichnet, daß die Zugstange (11) zwischen ihren Enden gelenkig mit dem unteren Querlenker (5) verbunden ist.

3. Radaufhängung nach Anspruch 2, dadurch gekennzeichnet, daß die schräge Strebe (10) an dem sich von der gelenkigen Abstützung (Gelenk 15) am unteren Querlenker (5) nach unten erstreckenden Ende der Zugstange (11) angelenkt ist.

4. Radaufhängung nach Anspruch 1, dadurch gekennzeichnet, daß die Abstützung (23) der Tragfeder (6) in bezug auf die Verbindungslinie (24) des quer steifen aufbauseitigen Gelenkes (7) des unteren Querlenkers (5) mit dessen Radträger-Gelenk (18) auf der gleichen Seite liegt wie die Pendelstütze (8).

5. Radaufhängung nach Anspruch 4, dadurch gekennzeichnet, daß auch die Zugstange (11) auf der gleichen Seite am unteren Querlenker (5) angelenkt ist wie die Pendelstütze (8) und die Tragfeder (6).

Fig.1

Fig.2